# EUROPEAN PATENT APPLICATION

(11) **EP 4 660 723 A1**
(43) Date of publication of application: **10.12.2025**
(21) Application number: 24179655.6
(22) Date of filing: 03.06.2024
(51) Int. Cl.: G05B 19/042, G05B 19/418, G06F 9/44, G06F 9/445

(54) **COMPUTER-IMPLEMENTED METHOD AND SYSTEM FOR CONFIGURATING AN ELECTRICAL INFORMATION OF AT LEAST ONE MODULE USING AN ENGINEERING TOOL**

(71) Applicant: ABB SCHWEIZ AG, 5400 Baden (CH)
(72) Inventor: STARK, Katharina, 69469 Weinheim (DE); HOERNICKE, Mario, 76829 Landau (DE)
(74) Representative: Maiwald GmbH

(57) **Abstract**

The present invention relates to a computer-implemented method (100) for configurating an electrical information (10) of at least one module (30) using an engineering tool (40), wherein the at least one module (30) is used as a representation of a modular industrial plant (70), the method comprising:
- creating (102), by the engineering tool (40), a configuration file (50) to configure the at least one module (30);
- configuring (104) the configuration file (50) by adding an electrical library interface (52) to the configuration file (50) for being able to configure the electrical information (10) of the at least one module (30), wherein the electrical library interface (52) comprising at least one of the following electrical placeholder elements (54) to be able to configure an electrical function of at least one device (32) of the at least module (30):
∘ an electrical connection type element (56) providing a representation of an electrical power cabling connection of the at least one device (32) used in the at least one module (30);
∘ an electrical port type element (58) to be assigned to the at least device (32) in order to connect the at least one device (32) of the at least one module (30) to the electrical connection type element (56);
∘ an electrical placeholder symbol (60) representing an electrical element;

- determining (106) a symbol element (62) in the electrical interface library (52) of the configuration file (50) by using at least one of the electrical placeholder elements (54), wherein the symbol element (62) represents the at least one physical component (64) of the device (32) in the at least one module (30) for which the electrical information (10) is added;
- adding (108) an electrical property information (20) for the determined symbol element (62) in the engineering tool (40) to configure the electrical information (10) for the at least one device (32) of the at least one module (30).

## Description

### FIELD OF THE INVENTION

The present invention relates to a computer-implemented method and a system for configurating an electrical information of at least one module using an engineering tool, wherein the at least one module is used as a representation of a modular industrial plant.

### BACKGROUND OF THE INVENTION

Currently, modular plants are built up by combining modules. The modules are controlled by an overlaying layer, the POL (Process Orchestration Layer). While the POL controls the automation, the electrical side is typically part of another system. The US2022147025A1 describes configurating of such a modular plant.

A so-called module type package (= MPT) that can be configured as a configuration file describes the module focuses currently only on the automation of the module, but not on the electrical supply of it. Depending on the industry, the electrical supply might be very important, e.g. for modules like an electrolyzer or a wind turbine. But also in the chemicals industry, one has more energy-intensive modules like a heating which would be good to be able to get more details on.

For the engineering, although the process automation engineering can be significantly reduced due to the modular concept, the electrical engineering is still done in the traditional way not using the modular or MTP concept.

Further, currently, only typical automation devices like valves, pumps (as binary or analogue drive) and transmitters as well as tanks can be modelled in the MTP configuration file. However, the library contained in part 3 of the standard does not include any electrical devices nor does the rest of the standard foresee the usage or connection of electrical devices. Also the current devices in the MTP configuration file do not have any electrical information, e.g. regarding its electrical power supply, modelled, to be able to configure energy-based parameters, e.g. energy consumption of the devices.

There is a need to address these issues.

### SUMMARY OF THE INVENTION

Therefore, it would be advantageous to provide an improved concept for an automated configuration of an electrical information of at least one module, wherein the at least one module is used as a representation of a modular industrial plant to be able to automate optimization of energy consumption of the at least module of the modular industrial plant in an efficient manner.

The object of the present invention is solved by the subject matter of the independent claims, wherein further embodiments are incorporated in the dependent claims.

In a first aspect of the present invention, there is provided computer-implemented method for configurating an electrical information of at least one module using an engineering tool, wherein the at least one module is used as a representation of a modular industrial plant, the method comprising the following steps:
- creating, by the engineering tool, a configuration file to configure the at least one module;
- configuring the configuration file by adding an electrical library interface to the configuration file for being able to configure the electrical information of the at least one module, wherein the electrical library interface comprising at least one of the following electrical placeholder elements to be able to configure an electrical function of at least one device of the at least module:
   ∘ an electrical connection type element providing a representation of an electrical power cabling connection of the at least one device used in the at least one module;
   ∘ an electrical port type element to be assigned to the at least device in order to connect the at least one device of the at least one module to the electrical connection type element;
   ∘ an electrical placeholder symbol representing an electrical element;
- determining a symbol element in the electrical interface library of the configuration file by using at least one of the electrical placeholder elements, wherein the symbol element represents the at least one physical component of the device in the at least one module for which the electrical information is added;
- adding an electrical property information for the determined symbol element in the engineering tool to configure the electrical information for the at least one device of the at least one module.

In other words, an important aspect of the present invention is to extend the MTP configuration file by corresponding electrical aspects or to integrate of electrical equipment and electrical connections of a device in a module into the configuration file. For this, a common electrical library interface is implemented in the configuration file.

This electrical library interface is configurable in such a way that the following changes to configuration file can be implemented that are required to provide an electrical information to one or all devices as part of the module:
- Add a new connection line for electrical power connections, alternative to adding a dedicated line for electrical power, one could also add a line for energy in general and then differentiate between electrical and heat.
- In order to connect different devices, a new type of port fitting to this connection line must be created.
- Add new types: for devices like an electrical power converter or a switch a new device type, a so-called data assembly should be created. Also devices that have a process part as well as an electrical part like an electrolyzer can be created.
- For already existing devices like valve and pump/drive: one can derive a type from them including the electrical requirements, e.g. the power supply.

The electrical connections could also be made in a way similar to the one that is common for single line diagrams that are commonly used during electrical engineering. All connection typed could be for example visualized in a common diagram, e.g. using different line types (dotted, dashed...) or colors for different connections.

The new technical approach of the present invention provides the advantage that configuring of the electrical parameters or providing electrical information to devices in the module is simplified and automized in an efficient manner. This allows to improve engineering efficiency when configurating an industrial modular plant with the premise of taking into account various energy-consumption aspects for the different devices used in the module. In this way, an important contribution to improved sustainability and resource efficiency of industrial power plants can be provided.

According to an example, the electrical connection type element is used for an electrical cabling of the at least one device and wherein the electrical connection type element is configured as a power connector representing a means to provide a power flow to the at least one device. In this way, an electrical connection can be efficient modelled in the configuration file.

According to an example, the electrical connection type element comprises an information of the type of the electrical power flow. In this way, an efficient configuration of electrical aspects within the configuration file is provided.

According to an example, the electrical connection type element is added to an existing connector interface library within the configuration file. In this way, an efficient configuration of electrical aspects within the configuration file is provided.

According to an example, the electrical placeholder symbol is grouped under an existing library element of the configuration file or it is grouped under a newly created library element. In this way, an efficient configuration of electrical aspects within the configuration file is provided.

According to an example, the electrical placeholder element is created manually and directly in the electrical interface library of the configuration file. In this way, the configuration file can be efficiently adapted to changing electrical aspects.

According to an example, the electrical placeholder element is created in the engineering tool and then imported into the configuration file while the configuration file is generated. In this way, the configuration file can be efficiently configured to changing electrical aspects.

According to an example, the symbol element is created manually in the electrical interface library of the configuration file or at least one default symbol is provided that is used to be assigned to the at least one device. In this way, the configuration file can be efficiently configured to required electrical aspects.

According to an example, the at least one electrical property information for the determined symbol element is provided to a tag list and / or to an information representation tool within the engineering tool. In this way, the configuration file can be efficiently configured in respect of required electrical aspects.

According to an example, the electrical property information a new type or a new interface within the configuration file is created that specify a certain power consumption aspect of the at least one device. In this way, the configuration file can be efficiently configured to changing electrical aspects.

In a second aspect of the present invention, a system that is configured to execute the method according one of the previous examples for configurating an electrical information of at least one module using an engineering tool, wherein the at least one module is used as a representation of a modular industrial plant is provided.

In a third aspect of the present invention, a computer comprising a processor configured to perform the method according to the first aspect and / or according to any of the previous examples is provided.

In a fourth aspect of the present invention, a computer program product comprising instructions which, when the computer program is executed by a processor of a computer, causes the computer to perform the method of the first aspect and / or of any of the previous examples.

In a fifth aspect of the present invention, a machine-readable data medium and / or download product is provided containing the computer program according to the fourth aspect.

### BRIEF DESCRIPTION OF THE DRAWINGS

Exemplary embodiments will be described in the following with reference to the following drawings:
Fig. 1 illustrates a schematic flow-diagram of a method of the present invention according to an embodiment of the present invention;
Fig. 2 illustrates a schematic flow-diagram of a method of the present invention according to an embodiment of the present invention;
Fig. 3 illustrates a schematic diagram of a system of the present invention to implement the method of the present invention according to an embodiment of the present invention;
Fig. 4 illustrates an example of a modelled device of a module according to an embodiment of the present invention;
Fig. 5 illustrates an example of an electrical library interface of a configuration file according to an embodiment of the present invention; and
Fig. 6 illustrates a schematic example of grouping elements in the electrical library interface according to an embodiment of the present invention.

### DETAILED DESCRIPTION OF THE DRAWINGS

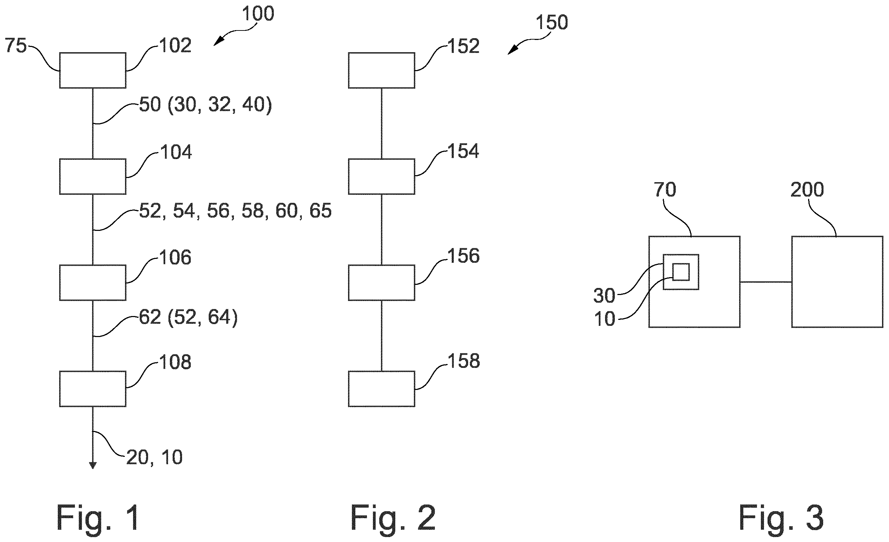

Fig. 1 illustrates a schematic flow-diagram of a computer-implemented method 100 for configurating an electrical information 10 of at least one module 30 using an engineering tool 40, wherein the at least one module 30 is used as a representation of a modular industrial plant 70 according to an embodiment of the present invention.

In a first step 102, by the engineering tool 40, a configuration file 50 which may be a module type package (MTP) file to configure the at least one module 30 is created.

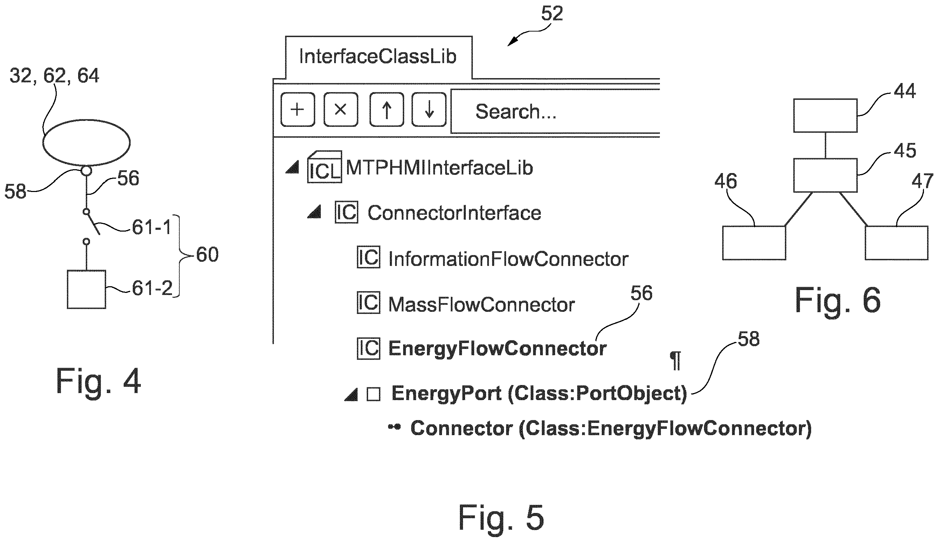

In a second step 104, the configuration file 50 is configured by adding an electrical library interface 52 to the configuration file 50 for being able to configure the electrical information 10 of the at least one module 30. The the electrical library interface 52 comprising at least one of the following electrical placeholder elements 54 to be able to configure an electrical function of at least one device 32 of the at least module 30:
- an electrical connection type element 56 providing a representation of an electrical power cabling connection of the at least one device 32 used in the at least one module 30 (see Fig. 5 for an example of applying such electrical connection type element 56 in the electrical interface library 52);
- an electrical port type element 58 to be assigned to the at least (physical) device 32 in order to connect the at least one device 32 of the at least one module 30 to the electrical connection type element 56 (see Fig. 5 for an example of applying such electrical port type element 58 in the electrical interface library 52);
- an electrical placeholder symbol 60 representing an (physical) electrical element (see Fig. 4 for an example of using such electrical placeholder symbol 60 for modelling an electrical connection between a device 32 and an electrical component 61).

In a third step 106, a symbol element 62 in the electrical interface library 52 of the configuration file 50 is determined by using at least one of the electrical placeholder elements 54, wherein the symbol element 62 represents the at least one physical component 64 of the device 32 in the at least one module 30 for which the electrical information 10 is added. The step 106 may be performed either by or in the engineering tool 40 or by or in the configuration file 50.

In this respect, it should be noted that the new symbol element 62 represents the new type object (e.g. in the MTP file 50 it will be a SystemUnitClass) and is not a parent object.

In a fourth step 108, an electrical property information 20 for the determined symbol element 62 in the engineering tool 40 is added to configure the electrical information 10 for the at least one device 32 of the at least one module 30.

In the following, further aspects of the present invention and optional embodiments of the method 100 are described:
The phrase "device" 32 as used herein could also stand for a subsystem. As a chiller, a heatpump and electrolyzer or another electrical device could also be quite complex and itself consist of more than one device, the term subsystem might be more suitable in that case. In case the subsystem is controlled on its own (e.g. by a microcontroller), it can be seen as one and thus form a (more complex) device/subsystem.

Other more complex subsystems like an electrolyzer that consists of several stacks or a power supply or a wind turbine could as well be modelled as an electrical subsystem. Then, the subsystem would rather be represented as an own PEA (process equipment assembly), FEA (function equipment assembly) or FM (function module).

Optionally, the electrical connection type element 56 is used for an electrical cabling of the at least one device 32 and wherein the electrical connection type element 56 is configured as a power connector representing a means to provide a power flow to the at least one device. An example of a grouping of these electrical connection type elements 56in the electrical library interface 52 is explained in Fig. 6.

Optionally, the electrical connection type element 56 comprises an information of the type of the electrical power flow which may be for example electrical, thermal power energy power.

Optionally, the electrical connection type element 56 is added to an existing connector interface library 52 within the configuration file 50.

Optionally, the electrical placeholder symbol 60 is grouped under an existing library element 65 of the configuration file 50 or it can be grouped under a newly created library element.

In this aspect, it should further be noted that the electrical placeholder symbol 60 may not only include new devices. In an alternative embodiment, also information of already existing devices, e.g. a pump, modelled in the electrical library interface 52 of the configuration file 50 can be extended by additional electrical (e.g. supply/power) information.

Optionally, the electrical placeholder element 54 is created manually and directly in the electrical interface library 52 of the configuration file 30.

Optionally, the electrical placeholder element 54 is created in the engineering tool 40 and then imported into the configuration file 40 while the configuration file 40 is generated.

In this respect, the following additional aspects should be noted:
As a first option, the new element/device with its corresponding ports may be created rather manual in the library of the MTP configuration file 50. This can then be re-used in further MTP-files 50.

However, as a second option, instead of the creating them directly in the MTP-file 50 , they could be created in the engineering tool 40 and then generated or imported/transferred or copied into the MTP-file 50 while the MTP-file 50 is generated. This approach is more practical to fit an improved engineering workflow.

Thus, the new elements will either be created by the tool, or some template of the library will be used and then copied onto the MTP-file when this is created.

In an embodiment, once the electrical interface library 52 is there, it will be added to the MTP-file 50.

Optionally, the symbol element 62 is created manually in the electrical interface library 52 of the configuration file 50 or at least one default symbol is provided that can be used to be assigned to the at least one device 32.

Optionally, the at least one electrical property information 20 for the determined symbol element 62 is provided to a tag list and / or to an information representation tool (e.g. an xCE-diagram) within the engineering tool 40.

Optionally, for the electrical property information 20 a new type or a new interface within the configuration file is created that specify a certain power consumption aspect of the at least one device 32.

Fig. 2 illustrates a schematic flow-diagram of a method 150 of the present invention according to a further embodiment of the present invention to better understand further aspects of the present invention. In general, these steps may be implicitly included in the method 100.

In step 152, a connection type and port type is created if it is not already existing.

In step 154, a new element in the electrical interface library 52, e.g. a heatpump, is created.

In step 156, ports (e.g. logical ports for material and ports for energy) are added.

In step 158, a new symbol is created for HMI or an existing symbol in the electrical interface library 52 is created. The new symbol or the existing symbol (electrical) properties may be automatically provided to a tag list and / or to an information representation tool.

The steps 152 to 156 may be performed in an automated manner inside the configuration file 50 as well as in the engineering tool 40.

Fig. 3 illustrates a schematic diagram of a system 200 of the present invention to implement the method 100 of the present invention according to an embodiment of the present invention for configurating an electrical information 10 of at least one module 30 using an engineering tool 40, wherein the at least one module 30 is used as a representation of a modular industrial plant 70.

Fig. 4 illustrates an example of a modelling an electrical connection of a device 32 as a physical component 64 of a module 30 according to an embodiment of the present invention.

The device 32, represented by a symbol element 62, may be a pump that is connected to an electrical drive or power supply 61-1 via an electrical connection type element 56 that represent an electrical cabling between the device 32 and the electrical drive 61-1. An electrical switch 61-2 that represents an electrical placeholder symbol 60 is connected between the device 32 and the electrical drive 61-1. The electrical cabling is connected to the device 32 via a electrical port type element 58 that represents the corresponding port of the device 32 to be used for an electrical connection.

Fig. 5 illustrates an example of an electrical library interface 52 of a configuration file 50 according to an embodiment of the present invention. In this figure, arranging in an example of an electrical connection type element 56 and an electrical port type element 58 can be seen.

As the devices may be connected graphically to reflect an electrical cabling, a new connection type to reflect that is required. This could be done for example in the "InterfaceClassLib" of the electrical library interface 52 underneath the element "Connectorlnterface" as a new connector. The new connector could be called "ElectricalConnector", "ElectricalFlowConnector", "PowerConnector" or "PowerFlowConnector". A power connector could be modelled to be more general, so that also thermal power could be modelled with it. An electrical connector would only represent electrical power, but would be sufficient to fulfill this idea here.

Fig. 6 illustrates a schematic example of grouping elements in the electrical library interface 52 according to an embodiment of the present invention.

The current library elements - the so-called data assemblies - which may be part of the standard, are all derived from the object 45 that may be linked to an object 44 which may be an element in the electrical library interface 52.

The new types that are required for the electrical additions could be categorized for example underneath the "IndicatorElement" (= object 46) or "ActiveElement" (= object 47), depending on the device.

For example, while a heatpump might fall underneath the "ActiveElement" as it can be controlled actively, a transformer might be grouped underneath the "IndicatorElement" in case it has no tap control and can only be monitored.

Instead of grouping the new devices underneath the existing elements, they could also be grouped underneath a new element, e.g. called "ElectricalElement". This could be derived from "DataAssembly" as well and add some typical electrical properties like voltage level, short circuit current or the like.

In order to create those new devices, the workflow as depicted with reference to Figure 2 can be used. The connection types and ports (step 152) would of course only be created once and then used by all the new objects.

The new element/device with its ports (ste 154 and 156) may be created rather manual in the elctrial library interface 52 of the MTP file 50. This can then be re-used in further MTP-files 50. Instead of the creating them directly in the MTP-file 50, they could be created in the engineering tool 40 and then generated into the MTP-file 50 while the MTP-file is generated. This approach will be more practical to fit an improved engineering workflow.

A corresponding symbol 62 may be created manually and added to the engineering tool 40. An alternative would be to offer either one or a set of default symbols that the user can select for a new device. By this, the user might be able to create the device on its own: enter a type, a set of ports, choose a symbol and ready it is - usable for a project. (Step 152 is then already made upfront.)

In a further aspect of the present invention, it is noted that the electrical aspects can also be modelled as some sort of interface (or as another type in case of derivation from multiple types is possible).

Then, this interface or type could focus on the power consumption aspect and be named for example "PowerConsumptionAspect" or similar. This would have the advantage that existing types could also implement that interface and thus could be extended in an easy way.

As all physical devices would have a certain power consumption, this aspect could be implemented for all physical devices. Rather than providing one simple value for the power consumption, the power consumption could be given in a more advanced way, e.g. a value for the stand-by power consumption plus an average value, e.g. for a binary actor like BinDrv.

For analogue actors, a linear formular (like "power consumption = percentage of input * 300W + 10W") might be provided. As this might be too rough for a lot of devices, a more accurate formular could be given instead of this or a table with certain points so that the power consumption can be interpolated in between or the nearest point taken.

An example of a possible power consumption aspect may be embodied by using the following properties:
Property name:
   StandByPower - Power consumption in stand-by mode, unit could be Watt (W). The unit could otherwise be a separate property.
Property name:
   Power - Power consumption when active, the value could be given in different way as further differentiated in the property "PowerType". The unit could be Watt (W), kiloWatt (kW) or otherwise be a separate property.
Property name:
   PowerType - Specifies the above property further. Could be an enum type with options like: fixed, linear, formula, value matrix.
Property name:
   StandByPowerUnit - In case if modelling of unit is required: Use same standard for unit modelling as e.g. in VDI/VDE/NAMUR 2658.
Property name:
   PowerUnit - In case if modelling of unit is required: Use same standard for unit modelling as e.g. in VDI/VDE/NAMUR 2658.

In another aspect of the present invention, energy simulation models could be applied to the foregoing methods to predict the energy consumption at any point in time during engineering.

In the following, the most relevant aspects of the present invention are summarized.

In a configuration file 50, the following additions are provided:
- New connection type for (electrical) power
- New port types for connection of power lines
- New devices for electrical engineering
- Derivation of existing devices (CMDs) and adding electrical aspects to them (e.g. a port for power supply)

The following aspects are addressed by the present invention as described in detail before:
- Usage of a common "electrical interface" that the library elements can implement
- Provide common electrical information in the MTP file that are the same for all devices
- Differentiation between pure process devices (e.g. already existing valve), pure electrical devices (e.g. electrical converter, switch) and hybrid devices (e.g. derived valve including electrical or new devices like and electrolyzer). This differentiation can be done automatically according to the different ports the device has.
- Usage of electrical information in combination with process automation to reduce power consumption.

### Reference signs

- 10: Electrical information
- 20: Electrical property information
- 30: Module
- 32: Device
- 40: Engineering tool
- 44: Object 0
- 45: Object 1
- 46: Object 2
- 47: Object 3
- 50: Configuration file
- 52: Electrical library interface
- 54: Electrical placeholder element
- 56: Electrical connection type element
- 58: Electrical port type element
- 60: Electrical placeholder symbol
- 61-1: Electrical switch
- 61-2: Electrical drive
- 62: Symbol element
- 64: physical component
- 65: Library element
- 70: modular industrial plant

- 100: Method
- 102: Creating
- 104: Creating
- 106: Determining
- 108: Adding
- 150: Method
- 152: Creating
- 154: Creating
- 156: Adding
- 158: Creating
- 200: System

## Claims

1. A computer-implemented method (100) for configurating an electrical information (10) of at least one module (30) using an engineering tool (40), wherein the at least one module (30) is used as a representation of a modular industrial plant (70), the method comprising:
- creating (102), by the engineering tool (40), a configuration file (50) to configure the at least one module (30);
- configuring (104) the configuration file (50) by adding an electrical library interface (52) to the configuration file (50) for being able to configure the electrical information (10) of the at least one module (30), wherein the electrical library interface (52) comprising at least one of the following electrical placeholder elements (54) to be able to configure an electrical function of at least one device (32) of the at least module (30):
∘ an electrical connection type element (56) providing a representation of an electrical power cabling connection of the at least one device (32) used in the at least one module (30);
∘ an electrical port type element (58) to be assigned to the at least device (32) in order to connect the at least one device (32) of the at least one module (30) to the electrical connection type element (56);
∘ an electrical placeholder symbol (60) representing an electrical element;
- determining (106) a symbol element (62) in the electrical interface library (52) of the configuration file (50) by using at least one of the electrical placeholder elements (54), wherein the symbol element (62) represents the at least one physical component (64) of the device (32) in the at least one module (30) for which the electrical information (10) is added;
- adding (108) an electrical property information (20) for the determined symbol element (62) in the engineering tool (40) to configure the electrical information (10) for the at least one device (32) of the at least one module (30).

2. Computer-implemented method (100) according to claim 1, wherein the electrical connection type element (56) is used for an electrical cabling of the at least one device (32) and wherein the electrical connection type element (56) is configured as a power connector representing a means to provide a power flow to the at least one device.

3. Computer-implemented method (100) according to claim 2, wherein the electrical connection type element (56) comprises an information of the type of the electrical power flow.

4. Computer-implemented method (100) according to any of the previous claims, wherein the electrical connection type element (56) is added to an existing connector interface library (52) within the configuration file (50).

5. Computer-implemented method (100) according to any of the previous claims, wherein the electrical placeholder symbol (60) is grouped under an existing library element (65) of the configuration file (50) or it is grouped under a newly created library element.

6. Computer-implemented method (100) according to any of the previous claims, wherein the electrical placeholder element (54) is created manually and directly in the electrical interface library (52) of the configuration file (30).

7. Computer-implemented method (100) according to any of the previous claims, wherein the electrical placeholder element (54) is created in the engineering tool (40) and then imported into the configuration file (40) while the configuration file (40) is generated.

8. Computer-implemented method (100) according to any of the previous claims, wherein the symbol element (62) is created manually in the electrical interface library (52) of the configuration file (50) or at least one default symbol is provided that is used to be assigned to the at least one device (32).

9. Computer-implemented method (100) according to any of the previous claims, wherein the at least one electrical property information (20) for the determined symbol element (62) is provided to a tag list and / or to an information representation tool within the engineering tool (40).

10. Computer-implemented method (100) according to any of the previous claims, wherein for the electrical property information (20) a new type or a new interface within the configuration file is created that specify a certain power consumption aspect of the at least one device (32).

11. System (200) configured to execute the method according one of the previous claims for configurating an electrical information (10) of at least one module (30) using an engineering tool (40), wherein the at least one module (30) is used as a representation of a modular industrial plant (70).

12. A computer comprising a processor configured to perform the method of any preceding claims 1 to 10.

13. A computer program product comprising instructions which, when the computer program is executed by a processor of a computer, causes the computer to perform the method of any of claims 1 to 10.

14. Machine-readable data medium and / or download product containing the computer program according to claim 13.
